# FASCICULE DE BREVET EUROPEEN

(11) **EP 3 956 095 B1**
(45) Date de publication et mention de la délivrance du brevet: **01.01.2025**
(21) Numéro de dépôt: 19721851.4
(22) Date de dépôt: 16.04.2019
(51) Int. Cl.: B23K 26/0622, B23K 26/352, B23K 26/082, B23K 103/04

(54) **PROCÉDÉ DE RÉALISATION D'UN EFFET D'IRISATION SUR LA SURFACE D'UN MATÉRIAU, ET DISPOSITIFS POUR SA MISE EN OEUVRE**
VERFAHREN ZUR ERZEUGUNG EINES IRISIERENDEN EFFEKTS AUF DER OBERFLÄCHE EINES MATERIALS UND VORRICHTUNGEN ZUR DURCHFÜHRUNG DES BESAGTEN VERFAHRENS
METHOD FOR THE CREATION OF AN IRIDESCENT EFFECT ON THE SURFACE OF A MATERIAL, AND DEVICES FOR CARRYING OUT SAID METHOD

(43) Date de publication de la demande: 23.02.2022
(73) Titulaire: Aperam, 1882 Luxembourg (LU)
(72) Inventeur: GUILLOTTE, Ismaël, 62131 Verquin (FR); LATOUCHE, Baptiste, 59800 Lille (FR); LOPES, Marcos Vinicius, 62400 Bethune (FR); DAMASSE, Jean-Michel, 42000 Saint-Etienne (FR); DIET, Francis, 75009 Paris (FR)
(74) Mandataire: Lavoix
(86) Numéro de dépôt international: PCT/IB2019/053117
(87) Numéro de publication internationale: WO 2020/212728

(56) Documents cités:
- EP-A2- 1 174 208
- US-A1- 2015 352 664
- B. LIU: "Evolution of nano-ripples on stainless steel irradiated by picosecond laser pulses", JOURNAL OF LASER APPLICATIONS, 26 February 2014 (2014-02-26), XP002796518

## Description

La présente invention concerne les traitements laser des surfaces des tôles en acier inoxydable ou autres matériaux, destinés à conférer à ces surfaces un aspect irisé.

Le traitement irisé, aussi appelé « LIPPS » ou « ripples » consiste à irradier la surface d'un matériau avec un rayonnement laser pulsé de faible durée de pulse (inférieure à une nanoseconde). Le diamètre de chaque pulse à son lieu d'impact sur le matériau à traiter est typiquement de l'ordre de 10 à quelques centaines de µm. Si l'énergie du faisceau incident est suffisamment importante, cette irradiation induit la modification de la structure et/ou la réorganisation de la surface du matériau qui va adopter une structure périodique. Cependant, si l'énergie du faisceau est trop importante, un phénomène d'ablation par vaporisation/sublimation/onde de choc peut avoir lieu, préférentiellement ou conjointement à la formation de la structure superficielle périodique. On peut aisément déterminer expérimentalement quelle gamme de quantité d'énergie est à utiliser pour un matériau donné, afin d'obtenir l'effet d'irisation désiré avec ou sans altération de l'état de surface ou de la brillance.

Un tel traitement est pratiqué, notamment, mais pas uniquement, sur des aciers inoxydables de tous types. Le but de ce traitement peut être purement esthétique, mais il permet aussi de modifier la mouillabilité de la surface, et aussi sa résistance à la friction et à réduire l'adhérence bactérienne. Le traitement peut se faire directement sur la surface de l'objet sur lequel se trouve la couche de passivation de l'acier inoxydable sans besoin d'une activation/dépassivation préalable.

D'autres matériaux sur lesquels ce traitement est pratiqué sont, notamment, des métaux divers, des polymères tels que le PVC, des céramiques, le verre.

Dans la suite du texte, le cas des aciers inoxydables sera privilégié, étant entendu que l'invention est applicable à tous les matériaux métalliques ou non-métalliques qui sont actuellement, ou seraient connus dans l'avenir, pour pouvoir présenter un aspect irisé suite à un traitement laser effectué comme indiqué, éventuellement en adaptant les paramètres de fonctionnement précis de l'installation (puissance et fréquence des lasers...) dont il est connu qu'ils jouent un rôle dans l'obtention de l'aspect irisé résultant de la formation d'une structure superficielle périodique.

Bien que le mécanisme exact de formation de cette structure superficielle périodique ne soit pas encore déterminé, les tests et caractérisations réalisés par différents laboratoires montrent qu'en fonction du nombre de passes de laser et/ou de l'énergie de pulse et/ou des paramètres de balayage, la structure de la surface peut présenter l'une des quatre structures suivantes, selon l'énergie d'irradiation totale par unité de surface, ces structures étant classées par ordre d'énergie croissant et leurs dénomination étant habituelles pour l'homme du métier, même non anglophone :

### 1) Structure dite « HSFL » (High Spatial Frequency LIPPS):

Cette structure est composée de petites vaguelettes qui, dans le cas des aciers inoxydables, sont orientées dans le sens de la polarisation du faisceau laser incident. La fréquence spatiale de ces vaguelettes est inférieure à la longueur d'onde du laser utilisé pour le traitement.

### 2) Structure dite « LSFL » (Low Spatial Frequency LIPPS):

Cette structure est composée de vaguelettes plus grosses que les précédentes orientées, dans le cas des aciers inoxydables, dans le sens perpendiculaire à la polarisation du faisceau incident. La fréquence spatiale de ces vaguelettes est légèrement inférieure, ou supérieure, ou égale à la longueur d'onde du laser. Pour le traitement d'une surface en acier inoxydable avec un laser de longueur d'onde 1064 nm, la périodicité des vaguelettes est de l'ordre de 1 µm. Il est encore possible de voir la structure HSFL dans les creux de la structure LSFL.

On notera que pour certains matériaux, les orientations respectives des structures HSFL et LSFL peuvent être inversées par rapport à ce qu'elles sont pour les aciers inoxydables.

### 3) Structure dite « Grooves » ou « Bumps » :

Cette structure est composée de bosses de dimensions micrométriques couvrant l'intégralité de la surface traitée. Ces bosses s'organisent selon une structure s'apparentant à un aspect « peau de serpent ».

### 4) Structure en pics ou « spikes » :

Cette structure est composée de pics dont la hauteur va de quelques micromètres à quelques dizaines de micromètres. La distance séparant les pics dépend des paramètres du traitement.

On trouvera plus de détails sur ces structures et le mécanisme de leurs apparitions notamment dans l'article « Evolution of nano-ripples on stainless steel irradiated by picosecond laser pulses », Journal of Laser Applications 26, février 2014, de B. Liu et al., qui fonde la base du préambule des revendications indépendantes 1 et 11. Il y est notamment dit que, pour un nombre de pulses égal, une augmentation de la fluence de l'irradiation conduit à obtenir des HSFL plutôt que des LSFL (comme on vient de le dire), alors que pour une fluence égale, un nombre de pulses plus élevé conduit à la création de LSFL plutôt que de HSFL, jusqu'à ce que le nombre de pulses devienne trop élevé pour que des ripples soient observées. La configuration exacte de la surface après irradiation résulte donc d'un mécanisme mettant en jeu à la fois le nombre de pulses reçus et l'énergie délivrée par chacun d'entre eux, pour un matériau donné. Ce mécanisme est complexe, mais pour un matériau donné, des conditions d'obtention fiables de l'une ou l'autre des configurations citées ci-dessus peuvent être déterminées expérimentalement par l'utilisateur.

En général, dans les deux premiers cas, cette organisation périodique de la surface permet un phénomène induit, bien connu des praticiens des traitements de surface par laser, qui est la diffraction de la lumière par la création d'un réseau optique lorsque l'échantillon traité est placé sous une source lumineuse. On peut alors observer en fonction des orientations et positions de l'utilisateur et de la lumière les couleurs de l'arc-en-ciel sur l'échantillon. C'est ce que l'on appelle un « aspect irisé ».

Cet aspect n'existe plus lorsque la surface de l'échantillon présente de façon prononcée un aspect selon les troisième et quatrième cas précités, car, dans ces deux cas, l'énergie apportée par la source laser sur la surface de l'échantillon a atteint un niveau trop élevé, au moins localement, entraînant des déformations de la surface qui ne permettent plus l'obtention de l'aspect irisé, car la structuration de la surface a perdu son caractère périodique.

Cette irisation ne doit pas être confondue avec les colorations de la surface des aciers inoxydables qui sont obtenues, de manière volontaire ou involontaire, par des traitements plasma ou des oxydations superficielles dues à un passage dans un four ou par le passage d'un chalumeau. L'aspect irisé dont il est question dans la présente invention ne résulte pas d'une coloration du matériau à proprement parler, mais de l'apparition de couleurs sur la surface, sous certaines conditions d'observation. L'absence de périodicité de la structure surfacique dans les procédés de coloration proprement dits est une différence essentielle entre l'irisation des surfaces dont relève la présente invention et la coloration des inox par plasma, passage au four ou passage d'un chalumeau.

Il faut, cependant, remarquer que l'observation ou non d'une telle irisation est habituellement très directionnelle, c'est-à-dire que l'observation de cette irisation, et l'intensité de l'irisation observée, sont fortement dépendantes de l'angle selon lequel on observe la surface du matériau.

Un problème auquel les praticiens de l'irisation des surfaces sont confrontés est le suivant.

Il est actuellement possible de réaliser en laboratoire des échantillons homogènes avec un traitement irisé en utilisant soit uniquement un système couplant un laser et un scanner, réalisant à la fois un axe rapide de défilement du faisceau laser (via une roue polygonale ou un miroir galvanomètre) et un axe lent de défilement du faisceau laser (via un miroir galvo), soit un système à laser et scanner, couplé avec un bras robotisé réalisant le déplacement du scanner selon l'axe lent par rapport à l'objet à traiter.

Le déplacement du scanner selon l'axe lent peut être remplacé par un déplacement de l'objet à traiter, tel qu'une tôle, selon l'axe lent, face à un laser qui reste fixe selon l'axe lent et se déplace selon l'axe rapide. On peut aussi prévoir que le laser reste fixe selon les deux axes (lent et rapide), et que ce soit l'objet à traiter qui soit déplacé selon les deux axes. L'essentiel est d'avoir un mouvement relatif entre l'objet à traiter et le laser, successivement selon les deux axes.

Le mécanisme de formation des structures qu'on a décrites dépend de l'énergie totale transférée à la surface du matériau et de la répartition spatiale et temporelle de cette énergie. Ainsi, l'« intensité » de l'irisation obtenue grâce aux LSFL va augmenter entre chaque nouveau passage du laser sur les passages déjà traités, jusqu'à atteindre un maximum, puis elle va décroître lorsque les LSFL vont progressivement se transformer en "Bumps" sous l'effet de l'apport d'énergie supplémentaire.

Cela implique qu'il existe un optimum d'énergie à transférer à la surface du matériau, optimum pour lequel l'effet de l'irisation est le plus intense, et qu'il faut déterminer cet optimum et le réaliser sur l'ensemble de la surface concernée.

Cependant, les objets traités sont généralement de petite taille et/ou réalisés avec des productivités faibles.

La limitation en taille des objets est due principalement à la limitation des dimensions des champs optiques des ensembles formés par le laser, le scanner et le système de focalisation, ce dernier pouvant être, par exemple, une lentille, ou un miroir convergent. En effet, l'obtention d'un traitement homogène nécessite un contrôle parfait du traitement en tous points de la surface. Or, quels que soient les systèmes de focalisation utilisés, ils possèdent un champ optique sur lequel ils ont un effet stable dans une zone optimale. Mais dès que l'on sort de cette zone optimale, le système induit des distorsions et/ou des atténuations de la puissance du faisceau laser. Elles se traduisent par un traitement non homogène entre la zone optimale du champ optique et les zones qui sont situées au-delà de cette zone optimale.

Ainsi, pour traiter des grandes surfaces de tôles d'acier inoxydable, il faudrait des systèmes de focalisation à large champ, qui seraient encombrants et réalisables seulement à la demande. De plus, il faudrait pouvoir les utiliser conjointement avec des lasers de durée de pulse ultra-courtes de forte puissance, qui ne sont pas encore largement disponibles sur le marché.

Pour remédier à ce double inconvénient, les solutions connues sont d'utiliser des systèmes de focalisation classiques et des lasers actuellement disponibles sur le marché, et :
- soit de placer côte à côte plusieurs dispositifs incluant ces systèmes de focalisation et lasers dans le cas d'un traitement en ligne d'une bande en défilement ;
- soit de réaliser le traitement en plusieurs fois (selon une succession de bandes réparties sur la surface pour un système discontinu) ;
- soit de combiner ces deux solutions.

Cependant cette solution nécessite d'avoir une gestion particulièrement soigneuse des zones de jonction entre les champs optiques de deux dispositifs successifs, qui, si elles sont mal réalisées, peuvent causer un phénomène appelé « stitching » par les hommes du métier, et que l'on va décrire.

Ce mécanisme empêche d'avoir recours à un recouvrement très significatif des champs pour joindre deux champs de traitement laser consécutifs.

En effet, s'il y a un recouvrement très significatif des champs, qui serait de l'ordre de grandeur de la résolution de l'œil humain, cela implique que la zone de recouvrement reçoit le double de la quantité d'énergie transférée sur le restant de la surface. Ce doublement de l'énergie injectée lors du traitement induit un changement local de la structure, et donc de l'aspect de surface, par rapport aux zones qui n'ont reçu que la quantité d'énergie nominale du traitement, et ce changement est visible à l'œil nu. C'est ce phénomène que l'on appelle couramment « stitching », en ce qu'il peut rendre visible la zone de jonction des deux champs.

Inversement, un écartement des champs de traitement laser, qui permettrait d'éviter assurément ce phénomène de doublement local du traitement et le « stitching » qui en résulterait, impliquerait la formation, entre les deux champs, d'une zone non traitée, ou qui serait, en tout cas, moins traitée que la normale. Cette zone serait également visible à l'œil nu.

Il faudrait donc réaliser une jonction quasi-parfaite entre les champs consécutifs de traitement laser.

D'autre part, la réalisation de ce type de traitement à forte productivité implique de travailler à hautes vitesses de balayage scanner (pouvant aller au moins jusqu'au km/s). Les systèmes de balayage utilisés pour ce type de traitement sont, le plus typiquement, des scanners possédant au moins une roue polygonale. Aux hautes fréquences de laser et hautes vitesses de balayage, ces systèmes présentent généralement des problèmes de synchronisation entre l'électronique du laser et celle du scanner. Ces écarts de synchronisation induisent un décalage de la position du premier pulse de la ligne par rapport à sa position visée, et donc de la ligne entière. Bien que cet écart soit prévisible et calculable (car résultant de la différence des fréquences de gestion des deux appareils), il est subi dans la plupart des systèmes actuels, et peut représenter un écart de quelques dizaines de micromètres entre les débuts des lignes de traitement (lignes qui sont dues au mouvement de la roue polygonale). Cet écart est fonction de la vitesse de rotation du polygone et de la fréquence propre du laser, et l'expérience montre qu'un chevauchement des champs avec un tel écart est déjà suffisant pour que la zone où le traitement a été doublé puisse influer sur l'aspect irisé de la tôle.

Certains systèmes en développement possèdent un moyen interne de corriger partiellement ce décalage, par l'action d'un miroir déflecteur supplémentaire, dit « galvo », fonctionnant à la manière d'un galvanomètre, situé en amont du polygone. Par exemple, la firme RAYLASE a présenté le concept d'un tel système au congrès SLT 2018 à Stuttgart les 5 et 6 juin 2018 : « New Génération of High-Speed Polygon-Driven 2D Deflection Units and Controller for High-Power and High-Rep. Rate Applications » (présentation d'E. Wagner, M. Weber et L. Bellini).

L'amélioration n'est, cependant, pas à elle seule d'une qualité suffisante pour que les effets indésirables d'un décalage des champs disparaissent de façon assurée. En effet, les parties initiale et finale de chaque ligne risquent de ne pas être traitées avec le même apport d'énergie que le restant de la ligne. Il faut aussi que les lignes correspondantes de deux champs voisins soient rigoureusement alignées.

Pour résoudre ce déficit local de traitement, on peut penser à augmenter l'apport d'énergie sur le restant de la ligne, mais on risque alors de dépasser l'apport d'énergie maximal adapté à la création des LSFL, donc de réduire voire supprimer l'irisation. Pour l'ensemble des autres systèmes, ce manque de synchronisation implique un besoin d'un recouvrement « virtuel » de l'ordre d'au moins deux fois la dispersion des positions des débuts de lignes entre les différents champs optiques. Ainsi, ce recouvrement se traduit par une bande hétérogène où il n'y a pas de zones non traitées entre les champs, mais où il peut y avoir un recouvrement de deux fois cette dispersion par endroits.

Si les bords de chaque champ sont définis comme « droits » et si, donc, la longueur de chaque ligne de chaque champ est constamment la même, comme cela va de soi a priori pour l'homme du métier, la zone de recouvrement se présente alors comme une fine bande rectiligne parcourant la pièce selon la direction de déplacement relatif de la pièce et des dispositifs à scanner laser, de largeur sensiblement égale à la largeur des lignes de traitement, donc sensiblement égale au double du diamètre du pulse, sur laquelle l'aspect du traitement n'est pas identique au reste de la surface. De même si les bords du champ de traitement sont définis par un motif périodique, la zone de recouvrement reproduit ce motif et est quand même visible à l'œil nu.

Le but de l'invention est de proposer un procédé de traitement au laser à pulses ultra-courts d'une surface d'un produit, tel qu'une tôle en acier inoxydable mais pas limitativement, permettant de rendre invisible à l'œil nu la zone de jonction de plusieurs champs optiques successifs qui seraient disposés de façon à ce que, pris ensemble, ils permettent de traiter une plus grande portion de la surface (typiquement sa totalité) que ne pourrait le faire un champ optique unique. Ce procédé devrait avoir une bonne productivité pour qu'il soit applicable de façon économiquement viable à l'échelle industrielle au traitement de produits de grande surface.

A cet effet, l'invention a pour objet un procédé de réalisation d'un effet visuel d'irisation sur la surface d'une pièce, selon lequel on envoie sur ladite surface des faisceaux laser, à durée de pulse inférieure à une nanoseconde, dans les champs optiques juxtaposés des systèmes de focalisation d'au moins deux dispositifs fixes, ou dans le champ d'au moins un dispositif mobile, le ou lesdits dispositifs comprenant chacun une source laser, un scanner et ledit système de focalisation, de façon à conférer à ladite surface sur la largeur dudit pulse une structure sous forme de vaguelettes, et on réalise un balayage par le ou lesdits scanners de ladite surface par lesdits faisceaux laser selon une série de lignes successives dans une direction de défilement relatif de la pièce et du ou des scanners et une série de lignes se situant dans le prolongement l'une de l'autre selon une direction perpendiculaire à ladite direction de défilement relatif, et appartenant chacune au champ optique du ou des dispositifs, chaque ligne étant de largeur égale au diamètre dudit pulse, caractérisé en ce que lesdits champs optiques de deux dispositifs fixes voisins ou les champs optiques correspondant à deux positions successives dudit dispositif mobile se recouvrent dans une zone de recouvrement d'une largeur comprise entre deux fois le diamètre du pulse du faisceau laser et 2 cm, de sorte que deux lignes se situant dans le prolongement l'une de l'autre se recouvrent au niveau d'une jonction, et en ce que, entre deux séries de lignes successives dans une direction de défilement relatif de la pièce et du ou des scanners, lesdites zones de jonction sont disposées de façon aléatoire ou de façon périodique organisée selon un motif aléatoire avec une périodicité égale à au moins dix fois la valeur maximale du décalage entre les jonctions présentes sur deux lignes successives selon ladite direction de défilement relatif à l'intérieur de ladite zone de recouvrement des champs optiques.

Entre la réalisation du balayage selon deux lignes successives dans ladite direction de défilement relatif de la pièce et du ou des scanners, on modifie la polarisation du faisceau laser de façon à créer des vaguelettes d'orientations différentes sur lesdites deux lignes successives.et d'orientation commune deux à deux dans la direction perpendiculaire à la direction de défilement relatif.

La polarisation du faisceau laser peut être modifiée selon un motif périodique, ledit motif périodique s'étendant sur M lignes consécutives selon la direction de défilement relatif de la pièce et des scanners, M étant égal à au moins 2, de préférence à au moins 3.

Deux lignes successives selon la direction de défilement relatif de la pièce et des scanners peuvent avoir des angles de polarisation qui diffèrent d'au moins 20°.

Les polarisations de deux lignes de deux champs voisins situées dans le prolongement l'une de l'autre peuvent être identiques.

On peut réaliser ledit déplacement relatif de ladite surface de ladite pièce et des dispositifs émettant lesdits faisceaux laser en plaçant ladite pièce sur un support mobile.

On peut réaliser ledit déplacement relatif de ladite surface de ladite pièce et des dispositifs émettant ledit ou lesdits faisceaux laser en plaçant le ou les dispositif(s) émettant lesdits faisceaux laser sur un support mobile.

Ladite pièce peut être une tôle.

Ladite surface de ladite pièce peut être tridimensionnelle, on mesure alors la distance entre le système de focalisation et la surface de la pièce, et on commande le système de focalisation, pour que celui-ci garantisse que le diamètre du pulse et la fluence du faisceau laser soient sensiblement les mêmes quelle que soit la distance effective entre le système de focalisation et la pièce.

Ladite surface de ladite pièce peut être tridimensionnelle, on mesure alors la distance entre le système de focalisation et la surface de la pièce, et on commande la position relative dudit dispositif et de ladite surface pour que la distance entre ledit système de focalisation et ladite surface reste identique lors de la mise en oeuvre du procédé.

Ladite pièce peut être en un acier inoxydable.

L'invention a également pour objet un dispositif pour l'imposition d'un aspect irisé à la surface d'une pièce par formation de vaguelettes sur ladite surface par le pulse d'un faisceau laser, ledit dispositif étant formé d'au moins deux dispositifs unitaires fixes juxtaposés ou d'au moins un dispositif unitaire mobile, comportant chacun une source laser générant un faisceau laser de durée de pulse inférieure à 1 ns, un système optique de mise en forme du faisceau, un scanner qui permet au pulse du faisceau, après son passage dans un système de focalisation, de balayer sous forme de lignes un champ optique à la surface de la pièce, lesdits champs optiques de deux dispositifs unitaires juxtaposés se recouvrant sur une largeur comprise entre deux fois le diamètre du pulse du faisceau laser et 2 cm, renfermant les jonctions de deux lignes réalisées chacune par un dispositif unitaire, et des moyens pour créer un mouvement relatif selon une direction donnée entre ledit dispositif et ladite pièce de manière à réaliser le traitement sur au moins une partie de la surface de ladite pièce, caractérisé en ce que lesdits scanners desdits dispositifs unitaires permettent de disposer lesdites jonctions pour que celles-ci forment, prises ensemble, un motif aléatoire, ou de façon périodique organisée selon un motif aléatoire avec une périodicité égale à au moins dix fois la valeur maximale du décalage entre les jonctions présentes sur deux lignes successives selon ladite direction de défilement relatif à l'intérieur de ladite zone de recouvrement des champs optiques.

Les systèmes optiques desdits dispositifs unitaires comportent, selon l'invention, un système optique de polarisation qui confère une polarisation déterminée audit faisceau, et des moyens pour faire varier cette polarisation pour que, sur ladite surface, deux lignes voisines selon la direction soient réalisés avec des pulses de polarisations différentes.

Lesdits dispositifs unitaires peuvent permettre de réaliser deux lignes voisines avec des pulses dont les polarisations différent d'au moins 20°.

Lesdits dispositifs unitaires peuvent comporter des moyens de mesure de la distance entre le système de focalisation et la surface de la pièce reliés à des moyens de commande du système de focalisation pour que celui-ci maintienne un diamètre de pulse et une fluence constants sur ladite surface, quelle que soit ladite distance.

Lesdits dispositifs unitaires peuvent comporter des moyens de mesure de la distance entre le système de focalisation et la surface de la pièce, reliés à des moyens de commande de la position relative dudit dispositif et de ladite surface du système de focalisation permettant de maintenir constante la distance entre ledit système de focalisation et ladite surface.

Lesdits moyens pour créer un mouvement relatif selon une direction donnée entre ledit dispositif et ladite pièce peuvent comprendre un support mobile pour la pièce.

Lesdits moyens pour créer un mouvement relatif entre ledit dispositif et ladite pièce peuvent comprendre un support mobile pour lesdits dispositifs unitaires.

Comme on l'aura compris, l'invention a pour but de rendre invisibles ou quasiment invisibles les jonctions entre deux lignes de la surface se faisant face, et réalisées par au moins deux dispositifs à laser scanner fixes juxtaposés, dont les lasers scanners respectifs se déplacent tous deux selon un axe dit « axe lent », les champs desdits dispositifs se recouvrant légèrement pour éviter le risque de non-traitement, ou de sous-traitement, de ces zones de jonction. A cet effet, on dispose de manière aléatoire les points de jonction desdites lignes se faisant face formées chacune par un dispositif à laser scanner (c'est-à-dire que les axes rapides respectifs des dispositifs sont dans le prolongement l'un de l'autre), si l'on considère deux ensembles de lignes qui sont successifs dans le sens de déplacement relatif de la pièce et des dispositifs à laser scanner, dit « axe rapide», qui est sensiblement perpendiculaire à l'axe lent.

Eventuellement, on peut remplacer les au moins deux dispositifs fixes juxtaposés par un seul dispositif mobile à laser scanner, que l'on déplace selon l'axe rapide pour réaliser successivement des lignes se faisant face dans les champs optiques correspondant à deux positions successives du dispositif mobile, ce qui est techniquement équivalent à l'utilisation simultanée de plusieurs tels dispositifs fixes juxtaposés mais augmente la durée du traitement.

Autrement dit, les points de jonction des lignes se faisant face générées par deux dispositifs à laser scanner immédiatement voisins (ou un dispositif à laser scanner qu'on a, entretemps, déplacé) ne sont pas situés sur une ligne droite orientée sensiblement selon l'axe lent, donc sensiblement perpendiculairement à la direction de balayage (axe rapide) des dispositifs à laser. Ils forment une ligne brisée de forme aléatoire, ou d'une forme périodique mais organisée selon un motif aléatoire qui se répète périodiquement (ce qui exclut un motif périodique régulier tel qu'une sinusoïde), qui reste contenue à l'intérieur de la zone de recouvrement des champs des deux dispositifs à laser scanner, et dont l'orientation générale est sensiblement perpendiculaire à ladite direction de balayage. Les jonctions entre les champs optiques de deux ensembles de lignes successifs, selon cette orientation générale, ne forment donc pas, prises ensemble, un motif linéaire, et ce motif est moins visible à l'œil nu que s'il constituait une ligne sensiblement droite. Ce motif n'est pas, non plus, de préférence, un motif périodique à courte période qui risquerait d'être également visible à l'oeil nu. Si le motif est périodique, il est préférable que la longueur de la période ne soit pas inférieure à dix fois la valeur maximale du décalage entre les jonctions présentes sur deux lignes successives.

La largeur de la zone dans laquelle lesdites jonctions sont présentes ne doit, de préférence, pas excéder 2 cm. Si cette largeur est trop réduite (inférieure à deux fois le diamètre du pulse), on risque d'avoir une ligne brisée trop proche d'une ligne droite pour que le risque d'une visibilité des jonctions soit écarté. Si on a une largeur trop élevée, on réduit le champ optique utile des dispositifs, et on détériore ainsi la productivité de l'installation.

Bien entendu, si pour traiter l'ensemble de la surface de la pièce on a besoin de plus de deux dispositifs à laser scanner, l'invention s'applique, de proche en proche, pour tous les couples de dispositifs voisins.

Ce procédé et le dispositif associé peuvent aussi être utilisés avantageusement en conjonction avec un procédé et un dispositif associé destinés à supprimer, ou au moins à très fortement atténuer, les problèmes liés à la directionnalité excessive de la vision de l'irisation de la surface d'un acier inoxydable traité par un dispositif comprenant un laser scanner. Selon ce procédé, on impose une polarisation différente de la lumière émise par le laser pour la formation des LIPPS de deux lignes disposées consécutivement selon la direction de déplacement relatif de la pièce et des dispositifs à laser scanner. L'utilisation de trois polarisations différentes au moins, appliquées à une série d'au moins trois lignes consécutives, est conseillée pour obtenir l'effet recherché.

L'invention sera mieux comprise à la lecture de la description qui suit, donnée en référence aux figures annexées suivantes :

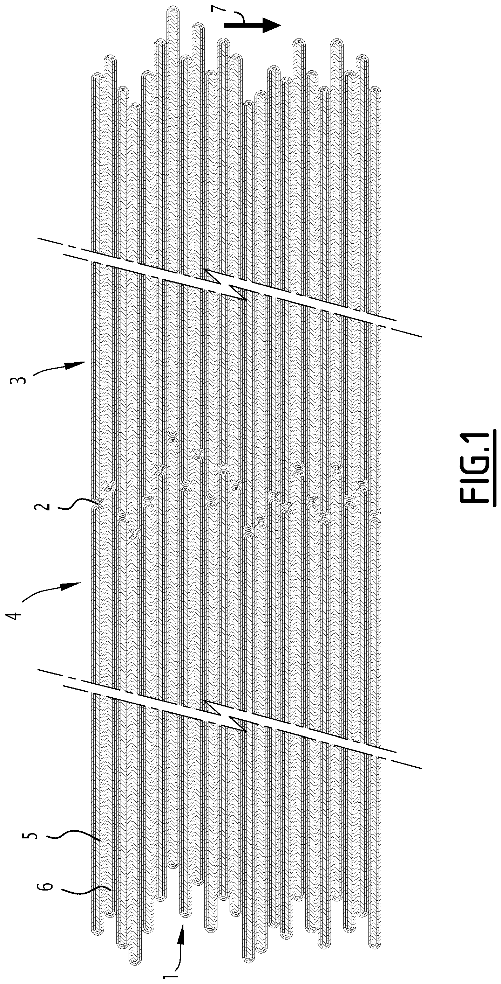

- La figure 1 qui montre la surface d'une tôle sur laquelle on a exécuté un traitement laser d'irisation selon l'invention au moyen de deux dispositifs à laser contigus, formant des lignes situées dans le prolongement l'une de l'autre selon les axes rapides des dispositifs, et avec des zones de recouvrement entre deux lignes disposées selon la variante préférée de l'invention, à savoir selon une ligne brisée aléatoire dont l'orientation générale est celle de l'axe lent, et non selon une ligne droite qui correspondrait sensiblement à l'axe lent, ou selon une ligne brisée périodique orientée généralement selon l'axe lent ;

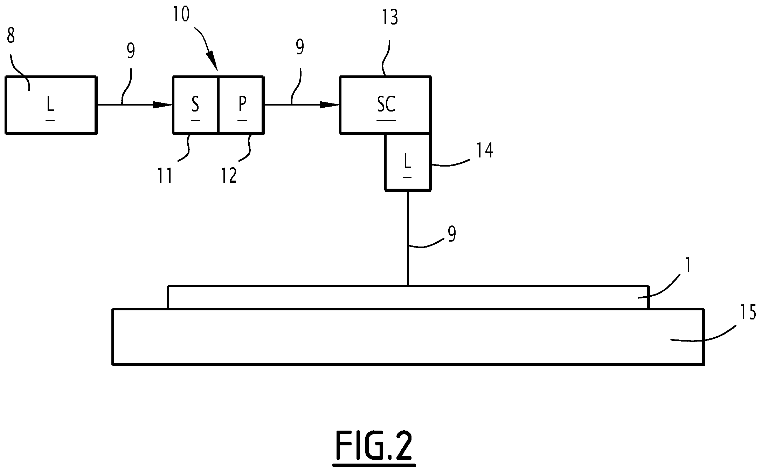

- La figure 2 qui montre le schéma de principe d'un dispositif selon l'invention, permettant la mise en oeuvre du procédé selon l'invention dans le champ optique d'un dispositif de traitement laser, et permettant également de rendre l'observation de l'irisation de la surface de la tôle indépendante de l'angle d'observation selon une variante préférée de l'invention ;

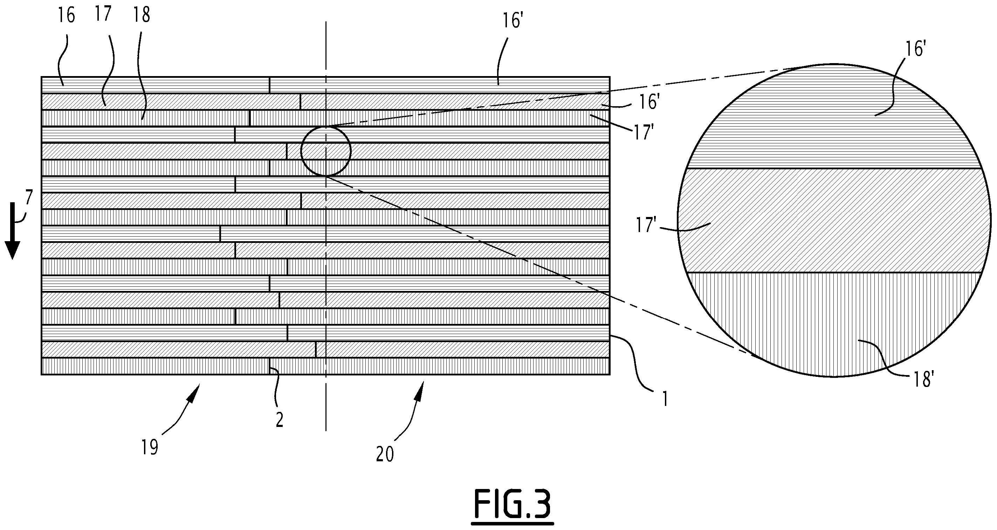

- La figure 3 qui montre la surface d'une tôle résultant de la mise en oeuvre de la variante préférée du procédé selon l'invention, améliorant le procédé utilisé dans le cas de la figure 1.

Le but de l'invention est donc de réaliser un traitement dont les défauts ne seraient pas détectés facilement par l'œil humain, qui repère rapidement ce qui est linéaire, et aussi ce qui est périodique selon une brève période. Dans ce cas, si l'on considère que le traitement optimal de la surface de la tôle 1 nécessite N passages successifs d'un laser sur une même ligne correspondant à l'axe rapide d'un champ optique donné pour injecter une quantité d'énergie nécessaire et suffisante pour obtenir les vaguelettes désirées, le décalage aléatoire, par rapport à l'axe lent, des N lignes superposées est identique d'un passage du laser à l'autre.

La figure 1 schématise une telle configuration, réalisée sur une tôle 1. On y voit que, pour des séries de deux passages (bandes de scan) du scanner 13 correspondant à deux champs de scanners 13 voisins situés dans le prolongement l'un de l'autre et se superposant légèrement pour éviter la présence de zones non traitées sur la surface de la tôle 1, les points de jonction 2 des champs optiques respectifs des deux séries 3, 4 de lignes réalisées respectivement par l'un des deux scanners sont décalés d'une façon non linéaire, mais aléatoire, entre deux lignes 5, 6, ou deux séries de N lignes superposées, disposées successivement selon l'axe lent 7 qui est la direction relative de progression de la tôle 1 et des scanners à laser 13. Autrement dit, les jonctions 2 respectives de deux lignes se faisant face et appartenant chacune à une série 3, 4 ne forment pas, prises ensemble, une droite ou un motif périodique à courte période, mais une ligne brisée aléatoirement qui est moins aisément discernable que ne le seraient une ligne droite ou une ligne brisée dans laquelle les décalages des jonctions 2 seraient périodiques avec une courte période.

Il est à noter qu'entre deux lignes successives 5, 6 réalisées dans le même champ optique et, donc, décalées dans la direction de progression 7 (autrement dit l'axe lent) des scanners à laser 13, ou dans la direction de progression de la tôle 1 si c'est elle qui est mobile selon l'axe lent alors que les scanners 13 sont fixes, ce problème ne se pose généralement pas avec la même intensité, sauf si le recouvrement entre les lignes de deux séries 3, 4 se succédant selon l'axe lent 7 est franchement mauvais.

C'est, en fait, le déplacement relatif relativement lent de la tôle 1 et des scanners 13 qu'il faut considérer, et que montre la flèche 7 qui définit l'axe lent.

En effet, comme on l'a dit, les différentes lignes 5, 6 de chaque groupe 3, 4 ont des largeurs sensiblement égales au diamètre du pulse, soit de 30-40 µm environ, généralement. Pour assurer qu'il ne subsiste pas, sur la surface de la tôle, de zones non traitées entre deux lignes 5, 6 successives d'un même groupe 3, 4 selon l'axe lent 7, il est possible de régler le galvo du scanner et/ou le dispositif de déplacement de la tôle pour que deux lignes 5, 6 successives selon l'axe lent 7 se chevauchent.

Autrement dit, les lignes 5, 6 d'un même groupe 3, 4 sont formées après un décalage des positions relatives des pulses de chaque scanner 13 et de la tôle 1 qui est légèrement inférieur au diamètre des pulses. Il peut donc bien y avoir un double traitement de la surface de la tôle 1 dans les zones de chevauchement des lignes 5, 6, mais comme le décalage des lignes 5, 6 selon l'axe lent 7 est maîtrisable avec une bonne précision, nettement meilleure que la précision du recouvrement de champs optiques voisins selon l'axe rapide, la largeur de ces zones, si elles existent, est de toute façon suffisamment faible (quelques µm) pour que le double traitement ne se traduise pas visuellement par une perturbation de l'effet irisé par rapport à ce que l'on obtient sur le restant de la surface de la tôle 1. On peut aussi faire le choix de, délibérément, ne pas prévoir de recouvrement entre deux lignes 5, 6 successives selon l'axe lent 7, mais de viser un décalage très réduit, de l'ordre de quelques µm, en tout cas suffisamment réduit pour qu'il ne provoque pas l'existence de lignes non traitées qui seraient visibles à l'oeil nu selon la direction perpendiculaire à l'axe lent 7.

Il doit être entendu que, sur la figure 1, chaque série de lignes 3, 4 situées dans le prolongement l'une de l'autre et se rejoignant au niveau d'une jonction 2 est constituée elle-même de la superposition de N lignes superposées, avec, par exemple, N = 3. Le nombre de lignes superposées pour un champ optique donné dépend de la quantité d'énergie qu'il est nécessaire d'apporter à la surface de la tôle 1 pour obtenir la configuration en vaguelettes désirée, responsable de l'irisation de la surface. Plus cette quantité est élevée, plus le nombre de lignes est élevé, pour une même énergie apportée par chaque passage du laser.

Autant que possible, cette configuration présente une structure du type LSFL, dont on a vu qu'elle était la plus apte à fournir cette irisation dans des conditions qui sont, cependant, dépendantes de l'angle de vision. L'énergie apportée selon une ligne donnée doit donc être contenue entre une limite inférieure en-dessous de laquelle on n'aurait pas de vaguelettes suffisamment prononcées, et une limite supérieure au-dessus de laquelle on augmente trop la probabilité d'une présence excessive de Bumps. Ces limites sont, bien entendu, très dépendantes de multiples facteurs, notamment le matériau précis de la tôle 1, son état de surface, l'énergie apportée par les pulses lors de chacun des passages du laser sur une zone donnée... Des expériences de routine permettent à l'homme du métier de définir ces limites en fonction du matériel dont il dispose et du matériau à traiter.

Bien que cette première approche permette de diminuer sensiblement la visibilité du recouvrement de deux champs successifs, en fonction du matériau utilisé et/ou de l'effet visé, du fait que les recouvrements entre champs (les jonctions 2) ne sont pas disposés selon une ligne droite correspondant à l'axe lent 7, mais selon une ligne brisée de façon aléatoire dont seule l'orientation générale correspond sensiblement à l'axe lent 7, qui suit les décalages entre les recouvrements, elle peut, cependant, s'avérer insuffisante pour rendre la surface suffisamment homogène. Dans ce cas, il est possible d'utiliser la même approche, mais en changeant le décalage entre les différents passages du laser. Cela permet d'augmenter encore le caractère aléatoire du motif de positionnement des recouvrements par rapport au cas précédent. Autrement dit, la ligne brisée qui joint les recouvrements successifs et constitue ledit motif présente un caractère non-périodique ou aléatoire encore moins évident. Mais il faut tout de même veiller à ce que les champs de traitement juxtaposés aient les mêmes décalages que le premier à chaque passe, car il faut éviter l'accumulation locale de passes de laser pour avoir un traitement en apparence homogène, tout comme il faut idéalement que tout point de la surface reçoive la même quantité d'énergie selon la même distribution, le même nombre de pulses et de passes.

L'utilisation d'un motif de superposition des bords de champs aléatoire permet donc de répartir les points d'hétérogénéité, sans que ceux-ci forment une ligne droite ou une ligne brisée à courte période, qui seraient trop visible à l'œil nu. Lorsque le motif qu'ils dessinent est identique pour toutes les passes de laser selon l'axe rapide ayant formé une ligne donnée, ces points de superposition sont des localisations où l'hétérogénéité est forte, car la discontinuité de la ligne est marquée à chaque passe.

Comme on l'a dit, une certaine périodicité du motif des jonctions 2 des bords de champ est acceptable si elle est réalisée sur une longueur suffisante selon l'axe lent 7, à savoir au moins égale à dix fois la valeur maximale du décalage entre les jonctions 2 présentes sur deux lignes successives 5, 6 selon l'axe lent 7.

La réalisation du traitement sous forme de lignes orientées selon l'axe rapide permet de profiter de la haute fréquence de répétition des lasers à ultra courte durée de pulse pour augmenter la productivité du traitement. Ainsi, en un seul balayage de la ligne par le scanner selon l'axe rapide, la ligne a pu être irradiée N fois si la distance entre deux pulses de deux champs voisins est égale au diamètre du pulse divisé par N. Cela permet donc de gommer l'effet que pourraient avoir des petites fluctuations de puissance sur l'homogénéité de la surface. Ainsi, pour obtenir N irradiations successives d'un même point de la surface de la tôle 1, il n'est pas forcément nécessaire de faire passer N fois un faisceau laser 9 sur ledit point, un seul passage du faisceau laser 9 peut suffire.

Ce mode d'action a, cependant, l'inconvénient de former des zones d'hétérogénéités aux extrémités des lignes sur des distances équivalentes au diamètre d'un pulse (quelques dizaines de micromètres).

Comme on l'a dit, l'effet d'irisation obtenu par traitement avec un laser 8 à pulses ultra-courts est lié à la formation spontanée en surface de la tôle 1 d'une structure périodique ayant un comportement analogue à un réseau optique sur la lumière se réfléchissant sur la surface. Comme discuté précédemment, le mécanisme de formation de cette structure en vaguelettes réparties périodiquement sur la surface traitée n'a pas encore été établi par la communauté scientifique.

Cependant, il a été montré (voir, par exemple, le document « Control Parameters In Pattern Formation Upon Femtosecond Laser Ablation », Olga Varlamova et al., Applied Surface Science 253 (2007) pp. 7932-7936), que l'orientation des vaguelettes était principalement liée à la polarisation du faisceau laser irradiant la surface. Ainsi, sur un acier inoxydable, les HSFL ont une orientation parallèle à la polarisation du faisceau incident alors que les LSFL qui se forment ensuite, lorsqu'une plus grande quantité d'énergie a été apportée en surface de la tôle, ont une orientation perpendiculaire à la polarisation du faisceau incident. Sur d'autres matériaux, c'est l'effet inverse que l'on peut observer, mais cela ne remet pas en cause l'applicabilité de l'invention à ces matériaux.

Dans le cas d'un traitement laser par lignes, il en résulte donc qu'une surface traitée sans modification de la polarisation du faisceau laser 9 au cours de ses différents passages sur une ligne donnée de ladite surface présente, en fin de traitement, une structure constituée de lignes/vaguelettes toutes orientées dans la même direction. Ceci induit que l'effet "réseau optique" de la surface est également orienté.

En effet, l'irisation apparaît comme maximale si l'observation se fait dans une direction transverse à l'orientation des vaguelettes et elle diminue au fur à mesure que l'angle d'orientation de l'observation s'aligne avec la structure de la surface. Ainsi, une observation de la surface dans l'alignement des vaguelettes ne fait pas apparaître de couleur. Cela peut constituer un inconvénient pour le produit final car cela impose de bien choisir l'orientation des vaguelettes dès le traitement pour avoir un produit sur lequel l'irisation apparaît dans les conditions d'observation voulues. De plus, le produit final n'apparaît très pleinement coloré que selon une seule direction principale d'observation, pour une source lumineuse donnée.

La variante optimale de l'invention, objet des figures 2 et 3, permet de supprimer cet inconvénient. Si deux champs successifs, formant ensemble une même ligne sur toute la largeur de la tôle 1 (la direction perpendiculaire à l'axe lent 7), possèdent la même polarisation selon cette ligne, l'effet visuel d'un double traitement de la zone de jonction entre ces deux champs tend à être beaucoup moins marqué que si les deux champs ont des polarisations différentes, avec une différence d'angle de polarisation, différence qui est de préférence entre 20 et 90°.

D'autre part, avoir, selon la variante préférée de l'invention, des polarisations assurément suffisamment différentes entre deux lignes successives selon la direction relative de défilement 7 de la pièce et des dispositifs à laser scanner, supprime la directionnalité de l'observation de l'irisation. La conjugaison des phénomènes que l'on a décrits fait que l'irisation de la tôle 1 traitée paraît beaucoup plus uniforme, dans toutes les directions d'observation, que dans le cas où on n'a pas cette alternance de polarisation entre lignes voisines.

Le traitement est effectué "en lignes", avec une distance séparant les centres des pulses légèrement inférieure au diamètre du pulse dans la direction de balayage rapide, pour qu'il n'y ait assurément pas de zones non traitées par le pulse. La solution selon la variante préférée de l'invention consiste à alterner des lignes pour lesquelles l'orientation des vaguelettes est modifiée, d'une ligne à l'autre, par l'action d'un polariseur ou de tout autre type de dispositif optique polarisant, placé sur le chemin optique du faisceau laser 9.

Ainsi, soit le champ de traitement est réalisé avec un système automatique permettant de modifier la polarisation du faisceau incident entre chaque ligne, soit le champ de traitement est réalisé en un nombre de fois M égal à au moins deux, et de préférence à au moins trois, M correspondant, donc, au nombre d'orientations différentes que procurent aux vaguelettes les polarisations périodiquement successives du pulse du faisceau laser qui les forme.

La figure 2 schématise une architecture typique d'une partie d'un dispositif unitaire permettant la mise en oeuvre du procédé selon l'invention, y compris dans la version préférée que l'on vient d'évoquer, pour traiter une partie d'une tôle 1 d'acier inoxydable sur un champ donné. Bien entendu, ce dispositif est commandé par des moyens automatisés, qui permettent de synchroniser les mouvements relatifs du support 15 de la tôle 1 et du faisceau laser 9, ainsi que de régler les paramètres du faisceau laser 9 et sa focalisation en fonction des besoins. La programmation de ces moyens automatisés ne relève que des compétences habituelles de l'homme du métier.

Le dispositif unitaire de la figure 2 comprend d'abord une source laser 8 d'un type classiquement connu pour la réalisation d'irisations de surfaces métalliques, donc, typiquement une source 8 générant un faisceau laser 9 pulsé de faible durée de pulse (inférieure à une nanoseconde), le diamètre de chaque pulse étant typiquement de l'ordre de 30 à 40 µm. L'énergie injectée sur la surface de l'acier inoxydable par le pulse est à déterminer expérimentalement, de manière à générer sur la surface de la tôle 1 des vaguelettes LIPPS, de préférence de type LSFL et éviter la formation de bumps, a fortiori de pics, et la fréquence et la puissance du faisceau laser 9 doivent être choisies en conséquence selon les critères connus de l'homme du métier à cet effet et compte tenu des caractéristiques précises des autres éléments du dispositif et du matériau à traiter. Le faisceau laser 9 généré par la source 8 passe ensuite dans un système optique 10 de mise en forme du faisceau 9, qui, outre ses composants classiques 11 permettant de régler la forme et les dimensions du faisceau 9, comporte, selon l'invention, un élément optique polarisant 12 qui permet de conférer au faisceau 9 une polarisation choisie par l'opérateur ou les automatismes qui gèrent le dispositif.

Le faisceau laser 9 passe ensuite dans un dispositif de balayage (par exemple un scanner) 13 qui, comme il est connu, permet au faisceau 9 de balayer la surface de la tôle 1 selon une trajectoire rectiligne (l'axe rapide) dans un champ de traitement. En sortie du scanner 13, là encore de manière classique, on trouve un système de focalisation 14, tel qu'une lentille de focalisation, grâce auquel le faisceau laser 9 est focalisé en direction de la tôle 1.

Dans l'exemple représenté, la tôle 1 est portée par un support mobile 15 qui permet de déplacer la tôle 1 dans un plan, selon la direction 7 (axe lent), ou, éventuellement, dans les trois dimensions de l'espace, par rapport au dispositif de génération, de polarisation et de balayage du faisceau laser 9, pour que celui-ci puisse traiter la surface de la tôle 1 selon une nouvelle ligne du champ de traitement du dispositif représenté.

Avant ce traitement de ladite nouvelle ligne, selon une variante de l'invention dont le résultat est illustré sur la figure 3, le dispositif optique de polarisation 12 du faisceau laser 9 a eu son réglage modifié, de façon à conférer au faisceau laser 9 une polarisation différente de celle qu'il avait lors du traitement de la ligne précédente. Au moins deux angles de polarisation différents, et de préférence au moins trois, sont susceptibles d'être obtenus grâce au dispositif optique de polarisation 10, et alternent, de préférence mais pas obligatoirement, de façon périodique à chaque changement de ligne. Une périodicité du motif de polarisation n'est pas indispensable, il suffit, comme on l'a dit, que les angles de polarisation de deux lignes 16, 17, 18, 16', 17', 18' voisines selon l'axe lent 7 soient différents, de préférence d'au moins 20° et d'au plus 90°. Mais une périodicité du motif, par exemple, comme représenté, avec des angles de polarisation qui se répètent toutes les trois lignes 16, 17, 18, 16', 17', 18' est préférée, dans la mesure où une programmation périodique du changement de polarisation est plus simple qu'une programmation aléatoire, en particulier comme deux lignes 16, 16' ou 17, 17' ou 18, 18' appartenant à deux champs différents et situées dans le prolongement l'une de l'autre selon l'axe rapide et se rejoignant au niveau d'une jonction 2 doivent avoir la même orientation de vaguelettes.

Une succession de polarisations aléatoires à l'intérieur d'un champ optique donné, respectant de préférence néanmoins le minimum d'écart angulaire précité de 20° à 90° serait acceptable.

Selon l'invention, l'ensemble du dispositif de traitement de la tôle 1 comporte une pluralité de dispositifs unitaires tels que celui qui vient d'être décrit, placés face à la tôle 1, et qui sont juxtaposés de façon à ce que les champs de traitement respectifs de deux dispositifs unitaires voisins, c'est-à-dire les champs optiques des systèmes de focalisation 14 de leurs scanners 13 respectifs, se chevauchent légèrement. Ce chevauchement est, typiquement, de l'ordre de deux fois la taille du pulse, plus une incertitude de position qui est liée à la période d'alimentation du laser 8 en pulses et à la vitesse de balayage du faisceau laser 9 selon l'axe rapide. On doit vérifier expérimentalement que ce chevauchement est suffisant pour assurer qu'il ne subsiste pas sur la tôle 1 de zones non traitées à la fin de l'opération. Egalement, les lignes 16, 16' ou 17, 17' ou 18, 18' générées par chacun de ces champs doivent être dans la continuité les unes des autres sur deux champs voisins, et les réglages des dispositifs unitaires doivent être identiques pour deux champs voisins, en particulier en termes de forme, dimension, puissance et angle de polarisation à un instant t de leurs faisceaux laser 9 respectifs, pour que le traitement soit homogène sur l'ensemble d'une ligne de la largeur de la tôle 1, et que l'alternance des angles de polarisation du faisceau laser 9 entre deux lignes consécutives 16, 17, 18, 16', 17', 18' selon l'axe lent 7 soit identique sur toute la largeur de la tôle 1.

Les moyens de commande de ces dispositifs unitaires sont, le plus typiquement, des moyens communs à tous les dispositifs unitaires, pour qu'ils agissent en parfaite synchronisation les uns avec les autres. Ils commandent aussi, de préférence, les déplacements du support 15 de la tôle 1, là encore pour une meilleure synchronisation des déplacements respectifs de la tôle 1 et des faisceaux lasers 9 des dispositifs unitaires.
Bien entendu, on pourrait remplacer le support mobile 15 par un support fixe, et assurer le déplacement relatif de la tôle 1 et des faisceaux lasers 9 des dispositifs unitaires de traitement en plaçant ceux-ci sur un support mobile. Les deux variantes peuvent d'ailleurs être combinées, en ce que le dispositif selon l'invention comporterait à la fois un support mobile 15 pour la tôle 1 et un autre support mobile pour les dispositifs unitaires de traitement, les deux supports pouvant être actionnés l'un ou l'autre, ou les deux simultanément, par le dispositif de commande, selon les souhaits de l'utilisateur. Dans le cas où on n'a qu'un seul dispositif de traitement que l'on déplace selon l'axe rapide une fois qu'il a traité une partie de la tôle 1. Dans ce cas, on garde en mémoire le motif des jonctions 2 réalisées lorsque le dispositif a traité une partie de la tôle 1, et on réalise ce même motif sur le ou les champs traités après le ou les déplacements du dispositif selon l'axe rapide.

Egalement, le déplacement relatif de la tôle 1 et des faisceaux lasers 9 des dispositifs unitaires selon l'axe lent 7 peut être réalisé à l'aide de moyens optiques intégrés aux dispositifs unitaires de traitement et agissant sur les emplacements des axes rapides des déplacements des faisceaux lasers 9 de ces dispositifs unitaires. Ces moyens optiques se substituent, ou s'ajoutent, aux moyens mécaniques de déplacement du support mobile 15 de la tôle 1 et/ou du support mobile des lasers 8 des dispositifs unitaires de traitement.

De tels moyens purement optiques pourraient suffire pour traiter des pièces de faibles dimensions, mais risquent fort de ne pas être suffisants pour traiter des pièces de relativement grandes dimensions avec une précision suffisante. Mais on peut combiner des moyens optiques et des moyens mécaniques en plaçant les moyens mécaniques dans une position donnée, puis en réalisant le déplacement relatif du faisceau laser 9 selon l'axe lent 7 par les moyens optiques, sur une distance « d » suffisamment courte pour que la précision du déplacement relatif soit suffisante, puis en déplaçant les moyens mécaniques d'une distance égale à « d » pour poursuivre ensuite le traitement de la tôle 1 en utilisant les moyens optiques pour réaliser à nouveau le déplacement relatif des faisceaux lasers 9 et de la tôle 1 selon l'axe lent.

Dans la variante préférée de l'invention, le nombre M correspond donc au nombre d'orientations différentes que l'on veut donner aux vaguelettes en assurant un interligne M fois plus grand qu'un traitement classique et en décalant les lignes d'un interligne classique entre chaque réalisation du champ. La figure 3 montre un exemple de l'aspect d'une telle réalisation avec M = 3.

La tôle 1 présente sur sa surface une succession périodique de lignes 16, 17, 18, 16', 17', 18' réalisées à l'aide de deux dispositifs selon l'invention qui ont permis la réalisation de ce motif périodique de trois sortes de telles lignes sur deux champs optiques 19, 20 contigus, les lignes 16, 17, 18 d'un champ donné étant dans le prolongement de lignes 16', 17', 18' similaires réalisées dans le champ optique voisin.

Les lignes 16, 17, 18, 16', 17', 18' du motif se distinguent les unes des autres par les effets des polarisations différentes que le dispositif de polarisation 12 a appliquées au faisceau laser 9 au moment de leur formation.

Comme on peut le voir sur la partie de la figure 3 qui représente une fraction agrandie de la surface de la tôle 1, dans l'exemple représenté qui n'est pas limitatif, la polarisation conférée au faisceau laser 9 lors de la génération de la première ligne 16, 16' du motif conduit à une orientation des vaguelettes dans la direction perpendiculaire à la direction relative de défilement 7 (axe lent) de la tôle 1 par rapport au dispositif de traitement laser. Puis, pour générer la deuxième ligne 17, 17' du motif, on a modifié la polarisation du faisceau laser 9 de façon à obtenir une orientation des vaguelettes à 45° de l'orientation des vaguelettes de la première ligne 16, 16'. Enfin, pour générer la troisième ligne 18, 18' du motif, on a modifié la polarisation du faisceau laser 9 de façon à obtenir une orientation des vaguelettes à 45° de l'orientation des vaguelettes de la deuxième ligne 17, 17', donc à 90° de l'orientation des vaguelettes de la première ligne 16, 16' : les vaguelettes de la troisième ligne 18, 18' sont donc orientées parallèlement à la direction relative de défilement 7 de la tôle 1 par rapport au dispositif de traitement laser.

Dans la zone de jonction de deux lignes 16, 16', 17, 17', 18, 18', situées dans le prolongement l'une de l'autre, on injecte donc sur la surface de la tôle 1 une énergie supérieure à celle qu'on injecte sur le restant de la surface, tout comme dans la variante de base de l'invention précédemment décrite. Ce fait est marqué par l'existence de zones 2 ayant subi un surtraitement et situées à la jonction des champs voisins, et dont la situation précise à l'intérieur de la zone de recouvrement des champs est aléatoire conformément à l'invention. Mais le fait que dans ces zones de jonction 2, les lignes 16, 17, 18, 16', 17', 18' de chaque champ optique qui se rejoignent ont été réalisées avec la même polarisation du faisceau laser 9 atténue encore plus nettement l'altération de l'effet visuel d'irisation de la surface de la tôle 1 que l'on constate en l'absence de polarisation contrôlée du faisceau laser 9. L'absence de continuité de l'orientation des vaguelettes d'un champ optique à l'autre tendrait à augmenter la visibilité de la zone de jonction des champs sur une ligne donnée, en créant une zone d'hétérogénéité sur la surface. Il faut simplement veiller à ce que les lignes 16, 17, 18, 16', 17', 18' des deux champs voisins qui ont été réalisées avec des polarisations identiques soient bien dans le prolongement les unes des autres, mais cette précaution sur la colinéarité des lignes 16, 16', 17, 17', 18, 18' de champs voisins était aussi à prendre dans l'exécution de la version de base du procédé selon l'invention, voir la figure 1, et le matériel utilisé à cet effet peut aussi être utilisé dans le cadre de cette variante de l'invention. Il suffit de s'assurer que les changements de polarisation des faisceaux laser 7 des dispositifs concernant chaque champ s'effectuent avec les mêmes valeurs pour les lignes 16, 17, 18, 16', 17', 18' des champs qui se joignent.

L'utilisation de M = 2 orientations de polarisation différentes, déphasées, par exemple, de 90°, permet déjà d'avoir un effet d'irisation visible selon la plupart des directions d'observation. Cependant, l'intensité résultant de l'irisation varie encore assez sensiblement lors de l'observation selon un angle de 45°, et on peut juger que le problème de l'absence de directionnalité de l'effet d'irisation ne serait toujours pas résolu de façon complètement satisfaisante. Cela n'est plus visible dès que M est supérieur à 2, de préférence si les angles sont écartés de plus de 20° entre deux lignes 16, 17, 18, 16', 17', 18' successives.

Ainsi en réalisant un traitement avec au moins trois angles de polarisation distincts répartis entre 0 et 90° et présentant, de préférence, des différences de polarisation d'au moins 20° entre deux lignes 16, 17, 18, 16', 17', 18' successives selon l'axe lent 7, l'expérience montre que l'irisation de la surface est visible selon toutes les directions avec une intensité similaire. On peut utiliser un nombre M d'orientations supérieur à 3, mais il faut alors veiller à ce que les angles de polarisation de deux lignes voisines soient suffisamment différents les uns des autres pour obtenir l'absence de directionnalité de l'effet irisé recherchée.

Il est cependant évident que la répartition de la structure de la surface selon différentes orientations induit une diminution de l'intensité totale de l'irisation en comparaison avec une surface traitée selon une seule direction de polarisation et observée selon l'angle optimal (l'angle transverse à la structure). Il y aurait donc un compromis à trouver entre l'intensité de l'effet visuel d'irisation perçu par l'observateur et le caractère omnidirectionnel de cet effet d'irisation. Mais trois directions de polarisation (donc une périodicité de trois lignes de ces directions, comme représenté sur la figure 3) représente déjà, au moins dans les cas les plus courants, un tel bon compromis.

Enfin pour obtenir un effet le plus homogène possible, il est recommandé d'alterner les orientations, de façon préférentiellement périodique, sur les distances les plus courtes possible. On préférera pour M orientations différentes alterner périodiquement une seule ligne de chaque orientation, de largeur égale ou, de préférence (pour assurer un traitement de l'ensemble de la surface de la tôle) légèrement inférieure au diamètre du pulse.

On peut traiter des tôles 1 dont la planéité ne serait pas parfaite en incluant dans le dispositif de traitement des moyens de mesure de la distance entre le système de focalisation 14 et la tôle 1, et en les couplant aux moyens de commande du système de focalisation 14, pour que celui-ci garantisse que le diamètre du pulse et la fluence du faisceau laser 9 soient sensiblement les mêmes quelle que soit la distance effective entre le système de focalisation 14 et la tôle 1. En variante, lesdits moyens de mesure de la distance entre le système de focalisation 14 et la tôle 1 peuvent être asservis à des moyens de déplacement relatif du dispositif selon l'invention et de la tôle 1, permettant de maintenir constante la distance entre le système de focalisation 14 et la surface de la tôle 1 pendant toute la durée du traitement de la tôle 1.

On peut aussi envisager l'application du procédé à d'autres matériaux que des tôles planes (par exemple à des tôles mises en forme, à des barres, à des tubes, à des pièces comportant des surfaces tridimensionnelles en général), en adaptant en conséquence les moyens de déplacement relatif des lasers et de la pièce à traiter, et/ou les commandes des moyens de focalisation si on doit gérer des différences de distance entre l'émetteur laser et la surface. Dans le cas des pièces présentant des surfaces sensiblement cylindriques (barres et tubes de section circulaire, par exemple), une façon de procéder serait de placer les dispositifs laser sur un support fixe et de prévoir, pour la pièce, un support permettant de la mettre en rotation pour faire défiler la surface de la pièce dans les champs optiques des lasers.

On rappelle enfin que si les aciers inoxydables sont des matériaux auxquels l'invention est applicable de façon privilégiée, les autres matériaux, métalliques ou non-métalliques, sur lesquels l'effet d'irisation de la surface au moyen d'un traitement laser peut être obtenu, sont aussi concernés par l'invention.

## Revendications

1. Procédé de réalisation d'un effet visuel d'irisation sur la surface d'une pièce (1), selon lequel on envoie sur ladite surface des faisceaux laser (9), à durée de pulse inférieure à une nanoseconde,
**caractérisé en ce que** les faisceaux laser (9) sont envoyés dans les champs optiques juxtaposés des systèmes de focalisation (14) d'au moins deux dispositifs fixes, ou dans le champ d'au moins un dispositif mobile, le ou lesdits dispositifs comprenant chacun une source laser (8), un scanner (13) et ledit système de focalisation (14), de façon à conférer à ladite surface sur la largeur dudit pulse une structure sous forme de vaguelettes, et on réalise un balayage par le ou lesdits scanners (13) de ladite surface par lesdits faisceauxlaser (9) selon une série de lignes (5, 6 ; 16, 17, 18, 16', 17', 18') successives dans une direction de défilement relatif (7) de la pièce (1) et du ou des scanners (13) et une série de lignes se situant dans le prolongement l'une de l'autre selon une direction perpendiculaire à ladite direction (7) de défilement relatif, et appartenant chacune au champ optique du ou des dispositifs, chaque ligne (5, 6 ; 16, 17, 18, 16', 17', 18') étant de largeur égale au diamètre dudit pulse, lesdits champs optiques de deux dispositifs fixes voisins ou les champs optiques correspondant à deux positions successives dudit dispositif mobile se recouvrent dans une zone de recouvrement d'une largeur comprise entre deux fois le diamètre du pulse du faisceau laser (9) et 2 cm, de sorte que deux lignes se situant dans le prolongement l'une de l'autre se recouvrent au niveau d'une jonction (2), et **en ce que**, entre deux séries de lignes (5, 6 ; 16, 17, 18, 16', 17', 18') successives dans une direction de défilement relatif (7) de la pièce (1) et du ou des scanners (13), lesdites zones de jonction (2) sont disposées de façon aléatoire ou de façon périodique organisée selon un motif aléatoire avec une périodicité égale à au moins dix fois la valeur maximale du décalage entre les jonctions (2) présentes sur deux lignes successives (5, 6 ; 16, 16', 17, 17', 18, 18') selon ladite direction de défilement relatif (7) à l'intérieur de ladite zone de recouvrement des champs optiques,
et **en ce que**, entre la réalisation du balayage selon deux lignes (16, 17, 18, 16', 17', 18') successives dans ladite direction de défilement relatif (7) de la pièce (1) et du ou des scanners (13) , on modifie la polarisation du faisceau laser (9) de façon à créer des vaguelettes d'orientations différentes sur lesdites deux lignes (16, 17, 18, 16', 17', 18') successives et d'orientation commune deux à deux dans la direction perpendiculaire à la direction de défilement relatif (7).

2. Procédé selon la revendication 1, **caractérisé en ce que** la polarisation du faisceau laser (9) est modifiée selon un motif périodique, ledit motif périodique s'étendant sur M lignes (16, 17, 18, 16', 17', 18') consécutives selon la direction de défilement relatif (7) de la pièce et des scanners, M étant égal à au moins 2, de préférence à au moins 3.

3. Procédé selon la revendication 1 ou 2, **caractérisé en ce que** deux lignes (16, 17, 18, 16', 17', 18') successives selon la direction de défilement relatif (7) de la pièce (1) et des scanners (13) ont des angles de polarisation qui diffèrent d'au moins 20°.

4. Procédé selon l'une des revendications 1 à 3, **caractérisé en ce que** les polarisations de deux lignes (16, 17, 18, 16', 17', 18') de deux champs voisins situées dans le prolongement l'une de l'autre sont identiques.

5. Procédé selon l'une des revendications 1 à 4, **caractérisé en ce qu'**on réalise ledit déplacement relatif de ladite surface de ladite pièce (1) et des dispositifs émettant lesdits faisceaux laser (9) en plaçant ladite pièce (1) sur un support mobile (15).

6. Procédé selon l'une des revendications 1 à 5, **caractérisé en ce qu'**on réalise ledit déplacement relatif de ladite surface de ladite pièce (1) et des dispositifs émettant ledit ou lesdits faisceaux laser (9) en plaçant le ou les dispositif(s) émettant lesdits faisceaux laser (9) sur un support mobile.

7. Procédé selon l'une des revendications 1 à 6, **caractérisé en ce que** ladite pièce (1) est une tôle.

8. Procédé selon l'une des revendications 1 à 6, **caractérisé en ce que** ladite surface de ladite pièce (1) est tridimensionnelle, **en ce qu'**on mesure la distance entre le système de focalisation (14) et la surface de la pièce (1), et **en ce qu'**on commande le système de focalisation (14), pour que celui-ci garantisse que le diamètre du pulse et la fluence du faisceau laser (9) soient sensiblement les mêmes quelle que soit la distance effective entre le système de focalisation (14) et la pièce (1).

9. Procédé selon l'une des revendications 1 à 6, **caractérisé en ce que** ladite surface de ladite pièce (1) est tridimensionnelle, **en ce qu'**on mesure la distance entre le système de focalisation (14) et la surface de la pièce (1), et **en ce qu'**on commande la position relative dudit dispositif et de ladite surface pour que la distance entre ledit système de focalisation (14) et ladite surface reste identique lors de la mise en oeuvre du procédé.

10. Procédé selon l'une des revendications 1 à 9, **caractérisé en ce que** ladite pièce (1) est en un acier inoxydable.

11. Dispositif pour l'imposition d'un aspect irisé à la surface d'une pièce (1) par formation de vaguelettes sur ladite surface par le pulse d'un faisceau laser (9),
**caractérisé en ce que** ledit dispositif est formé d'au moins deux dispositifs unitaires fixes juxtaposés ou d'au moins un dispositif unitaire mobile, comportant chacun une source laser (8) générant un faisceau laser (9) de durée de pulse inférieure à 1 ns, un système optique (10) de mise en forme du faisceau (9), un scanner (13) qui permet au pulse du faisceau (9), après son passage dans un système de focalisation (14), de balayer sous forme de lignes (5, 6 ; 16, 17, 18, 16', 17', 18') un champ optique à la surface de la pièce (1), lesdits champs optiques de deux dispositifs unitaires juxtaposés se recouvrant sur une largeur comprise entre deux fois le diamètre du pulse du faisceau laser (9) et 2 cm, renfermant les jonctions (2) de deux lignes (5, 6 ; 16, 17, 18, 16', 17', 18') réalisées chacune par un dispositif unitaire, et des moyens pour créer un mouvement relatif selon une direction (7) donnée entre ledit dispositif et ladite pièce (1) de manière à réaliser le traitement sur au moins une partie de la surface de ladite pièce (1), le ou les dispositif(s) unitaire(s) comprennent des moyens de commande automatisés permettant de synchroniser les mouvements relatifs d'un support (15) de la pièce (1) et du faisceau laser (9) et de régler les paramètres du faisceau laser (9) et la focalisation du faisceau laser (9), lesdits scanners (13) desdits dispositifs unitaires étant configurés pour disposer lesdites jonctions (2) pour que celles-ci forment, prises ensemble, un motif aléatoire, ou de façon périodique organisée selon un motif aléatoire avec une périodicité égale à au moins dix fois la valeur maximale du décalage entre les jonctions (2) présentes sur deux lignes successives (5, 6 ; 16, 17, 18, 16', 17', 18') selon ladite direction de défilement relatif (7) à l'intérieur de ladite zone de recouvrement des champs optiques, et **en ce que** les systèmes optiques (10) desdits dispositifs unitaires comportent un système optique de polarisation (12) qui confère une polarisation déterminée audit faisceau (9), et des moyens pour faire varier cette polarisation pour que, sur ladite surface, deux lignes (16, 17, 18, 16', 17', 18') voisines selon la direction (7) soient réalisés avec des pulses de polarisations différentes.

12. Dispositif selon la revendication 11, **caractérisé en ce que** lesdits dispositifs unitaires permettent de réaliser deux lignes (16, 17, 18, 16', 17', 18') voisines avec des pulses dont les polarisations différent d'au moins 20°.

13. Dispositif selon l'une des revendications 11 ou 12, **caractérisé en ce que** lesdits dispositifs unitaires comportent des moyens de mesure de la distance entre le système de focalisation (14) et la surface de la pièce (1) reliés à aux moyens de commande du système de focalisation (14) pour que celui-ci maintienne un diamètre de pulse et une fluence constants sur ladite surface, quelle que soit ladite distance.

14. Dispositif selon l'une des revendications 11 ou 12, **caractérisé en ce que** lesdits dispositifs unitaires comportent des moyens de mesure de la distance entre le système de focalisation (14) et la surface de la pièce (1), et **en ce que** ces moyens de mesure sont reliés aux moyens de commande de la position relative dudit dispositif et de ladite surface permettant de maintenir constante la distance entre ledit système de focalisation (14) et ladite surface.

15. Dispositif selon l'une des revendications 11 à 14, **caractérisé en ce que** lesdits moyens pour créer un mouvement relatif selon une direction (7) donnée entre ledit dispositif et ladite pièce (1) comprennent un support mobile (15) pour la pièce (1).

16. Dispositif selon l'une des revendications 11 à 15, **caractérisé en ce que** lesdits moyens pour créer un mouvement relatif entre ledit dispositif et ladite pièce (1) comprennent un support mobile pour lesdits dispositifs unitaires.

## Patentansprüche

1. Verfahren zur Erzeugung eines visuellen irisierenden Effekts auf der Oberfläche eines Teils (1), bei dem Laserstrahlen (9) mit einer Pulsdauer von weniger als einer Nanosekunde auf die Oberfläche gesendet werden,
**dadurch gekennzeichnet, dass** die Laserstrahlen (9) in die nebeneinanderliegenden optischen Felder der Fokussiersysteme (14) von mindestens zwei festen Vorrichtungen oder in das Feld von mindestens einer beweglichen Vorrichtung gesendet werden, die Vorrichtung(en) jeweils umfassend eine Laserquelle (8), einen Scanner (13) und das Fokussiersystem (14), um der Oberfläche über die Breite des Pulses eine Struktur in Form von Wellen zu verleihen, und wobei durch den oder die Scanner (13) eine Abtastung der Oberfläche durch die Laserstrahlen (9) gemäß einer Reihe von aufeinanderfolgenden Linien (5, 6; 16, 17, 18, 16', 17', 18') in einer relativen Vorlaufrichtung (7) des Teils (1) und des oder der Scanner (13) und einer Reihe von Linien, die sich in der Verlängerung zueinander in einer Richtung senkrecht zu der relativen Vorlaufrichtung (7) befinden und jeweils zu dem optischen Feld der Vorrichtung(en) gehören, durchgeführt wird, wobei jede Linie (5, 6; 16, 17, 18, 16', 17', 18') von einer Breite gleich wie der Durchmesser des Pulses ist, wobei die optischen Felder von zwei benachbarten festen Vorrichtungen oder die optischen Felder, die zwei aufeinanderfolgenden Positionen der beweglichen Vorrichtung entsprechen, sich in einem Überlappungsbereich mit einer Breite überlappen, die zwischen dem doppelten Durchmesser des Pulses des Laserstrahls (9) und 2 cm liegt, sodass zwei Linien, die sich in der Verlängerung zueinander befinden, sich an einer Verbindungsstelle (2) überlappen, und dass zwischen zwei Reihen von aufeinanderfolgenden Linien (5, 6; 16, 17, 18, 16', 17', 18') in einer relativen Vorlaufrichtung (7) des Teils (1) und des oder der Scanner (13) die Verbindungsbereiche (2) zufällig oder periodisch organisiert nach einem Zufallsmuster mit einer Periodizität angeordnet sind, die mindestens dem Zehnfachen des Maximalwerts des Versatzes zwischen den Verbindungsstellen (2) entspricht, die auf zwei aufeinanderfolgenden Linien (5, 6; 16, 16', 17, 17', 18, 18') gemäß der relativen Vorlaufrichtung (7) innerhalb des Überlappungsbereichs der optischen Felder vorhanden ist,
und dass zwischen der Durchführung der Abtastung entlang zweier aufeinanderfolgender Linien (16, 17, 18, 16', 17', 18') in der relativen Vorlaufrichtung (7) des Teils (1) und des oder der Scanner (13) die Polarisation des Laserstrahls (9) verändert wird, um Wellen mit unterschiedlichen Ausrichtungen auf den genannten zwei aufeinanderfolgenden Linien (16, 17, 18, 16', 17', 18') und mit paarweise gemeinsamer Ausrichtung in der Richtung senkrecht zu der relativen Vorlaufrichtung (7) zu erzeugen.

2. Verfahren nach Anspruch 1, **dadurch gekennzeichnet, dass** die Polarisation des Laserstrahls (9) in einem periodischen Muster verändert wird, wobei sich das periodische Muster über M aufeinanderfolgende Linien (16, 17, 18, 16', 17', 18') in der relativen Vorlaufrichtung (7) des Teils und der Scanner erstreckt, wobei M gleich wie mindestens 2, vorzugsweise mindestens 3, ist.

3. Verfahren nach Anspruch 1 oder 2, **dadurch gekennzeichnet, dass** zwei aufeinanderfolgende Linien (16, 17, 18, 16', 17', 18') entlang der relativen Vorlaufrichtung (7) des Teils (1) und der Scanner (13) Polarisationswinkel aufweisen, die sich um mindestens 20° unterscheiden.

4. Verfahren nach einem der Ansprüche 1 bis 3, **dadurch gekennzeichnet, dass** die Polarisationen von zwei Linien (16, 17, 18, 16', 17', 18') zweier benachbarter Felder, die sich in der Verlängerung zueinander befinden, identisch sind.

5. Verfahren nach einem der Ansprüche 1 bis 4, **dadurch gekennzeichnet, dass** die relative Bewegung der Oberfläche des Teils (1) und der Vorrichtungen, die die Laserstrahlen (9) emittieren, durchgeführt wird, indem das Teil (1) auf einem beweglichen Träger (15) platziert wird.

6. Verfahren nach einem der Ansprüche 1 bis 5, **dadurch gekennzeichnet, dass** die relative Bewegung der Oberfläche des Teils (1) und der Vorrichtungen, die den oder die Laserstrahlen (9) emittieren, dadurch erreicht wird, dass die Vorrichtung(en), die die Laserstrahlen (9) emittieren, auf einem beweglichen Träger angeordnet werden.

7. Verfahren nach einem der Ansprüche 1 bis 6, **dadurch gekennzeichnet, dass** das Teil (1) ein Blech ist.

8. Verfahren nach einem der Ansprüche 1 bis 6, **dadurch gekennzeichnet, dass** die Oberfläche des Teils (1) dreidimensional ist, dass der Abstand zwischen dem Fokussiersystem (14) und der Oberfläche des Teils (1) gemessen wird, und dass das Fokussiersystem (14) gesteuert wird, damit es sicherstellt, dass der Durchmesser des Pulses und die Fluenz des Laserstrahls (9) unabhängig von dem tatsächlichen Abstand zwischen dem Fokussiersystem (14) und dem Teil (1) im Wesentlichen gleich sind.

9. Verfahren nach einem der Ansprüche 1 bis 6, **dadurch gekennzeichnet, dass** die Oberfläche des Teils (1) dreidimensional ist, dass der Abstand zwischen dem Fokussiersystem (14) und der Oberfläche des Teils (1) gemessen wird, und dass die relative Position der Vorrichtung und der Oberfläche gesteuert wird, sodass der Abstand zwischen dem Fokussiersystem (14) und der Oberfläche bei der Durchführung des Verfahrens gleich bleibt.

10. Verfahren nach einem der Ansprüche 1 bis 9, **dadurch gekennzeichnet, dass** das Teil (1) aus einem Edelstahl ist.

11. Vorrichtung zum Aufbringen eines irisierenden Aspekts auf die Oberfläche eines Teils (1) durch Bildung von Wellen auf der Oberfläche durch den Puls eines Laserstrahls (9),
**dadurch gekennzeichnet, dass** die Vorrichtung aus mindestens zwei nebeneinanderliegenden festen Einheitsvorrichtungen oder mindestens einer beweglichen Einheitsvorrichtung gebildet ist, jeweils umfassend eine Laserquelle (8), die einen Laserstrahl (9) mit einer Pulsdauer von weniger als 1 ns erzeugt, ein optisches System (10) zum Formen des Strahls (9), einen Scanner (13), der es dem Puls des Strahls (9) nach seinem Durchgang durch ein Fokussiersystem (14) ermöglicht, in Form von Linien (5, 6; 16, 17, 18, 16', 17', 18') ein optisches Feld auf der Oberfläche des Teils (1) abzutasten, wobei sich die optischen Felder zweier nebeneinanderliegender Einheitsvorrichtungen über eine Breite zwischen dem doppelten Durchmesser des Laserstrahlpulses (9) und 2 cm überlappen und die Verbindungsstellen (2) zweier Linien (5, 6; 16, 17, 18, 16', 17', 18') umschließen, die jeweils von einer Einheitsvorrichtung ausgeführt werden, und Einrichtungen zum Erzeugen einer relativen Bewegung in einer gegebenen Richtung (7) zwischen der Vorrichtung und dem Teil (1), um die Behandlung auf mindestens einem Abschnitt der Oberfläche des Teils (1) auszuführen, die Einheitsvorrichtung(en) umfassend automatisierte Steuerungseinrichtungen, die es ermöglichen, die relativen Bewegungen eines Trägers (15) des Teils (1) und des Laserstrahls (9) zu synchronisieren und die Parameter des Laserstrahls (9) und die Fokussierung des Laserstrahls (9) einzustellen, wobei die Scanner (13) der Einheitsvorrichtungen konfiguriert sind, um die Verbindungsstellen anzuordnen, sodass sie zusammen ein Zufallsmuster bilden, oder periodisch organisiert in einem Zufallsmuster mit einer Periodizität von mindestens dem Zehnfachen des Maximalwerts des Versatzes zwischen den Verbindungsstellen (2) auf zwei aufeinanderfolgenden Zeilen (5, 6; 16, 17, 18, 16', 17', 18') in der relativen Vorlaufrichtung (7) innerhalb des Überlappungsbereichs der optischen Felder; und dass die optischen Systeme (10) der Einheitsvorrichtungen ein optisches Polarisationssystem (12), das dem Strahl (9) eine bestimmte Polarisation verleiht, und Einrichtungen zum Variieren dieser Polarisation umfassen, damit auf der Oberfläche zwei in der Richtung (7) benachbarte Linien (16, 17, 18, 16', 17', 18') mit Pulsen unterschiedlicher Polarisation ausgeführt werden.

12. Vorrichtung nach Anspruch 11, **dadurch gekennzeichnet, dass** die Einheitsvorrichtungen es ermöglichen, zwei benachbarte Leitungen (16, 17, 18, 16', 17', 18') mit Pulsen auszuführen, deren Polarisation sich um mindestens 20° unterscheiden.

13. Vorrichtung nach einem der Ansprüche 11 oder 12, **dadurch gekennzeichnet, dass** die Einheitsvorrichtungen Einrichtungen zum Messen des Abstands zwischen dem Fokussiersystem (14) und der Oberfläche des Teils (1) umfassen, die mit Steuerungseinrichtungen des Fokussiersystems (14) verbunden sind, damit dieses unabhängig von diesem Abstand einen konstanten Pulsdurchmesser und eine konstante Fluenz auf dieser Oberfläche aufrechterhält.

14. Vorrichtung nach einem der Ansprüche 11 oder 12, **dadurch gekennzeichnet, dass** die Einheitsvorrichtungen Einrichtungen zum Messen des Abstands zwischen dem Fokussiersystem (14) und der Oberfläche des Teils (1) umfassen, und dass diese Messeinrichtungen mit den Steuerungseinrichtungen der relativen Position der Vorrichtung und der Oberfläche verbunden sind, die es ermöglichen, den Abstand zwischen dem Fokussiersystem (14) und der Oberfläche konstant zu halten.

15. Vorrichtung nach einem der Ansprüche 11 bis 14, **dadurch gekennzeichnet, dass** die Einrichtungen zum Erzeugen einer Relativbewegung in einer gegebenen Richtung (7) zwischen der Vorrichtung und dem Teil (1) eine bewegliche Halterung (15) für das Teil (1) umfassen.

16. Vorrichtung nach einem der Ansprüche 11 bis 15, **dadurch gekennzeichnet, dass** die Einrichtungen zum Erzeugen einer relativen Bewegung zwischen der Vorrichtung und dem Teil (1) eine bewegliche Halterung für die Einheitsvorrichtungen umfassen.

## Claims

1. A method for the creation of a visual iridescent effect on the surface of a part (1), whereby laser beams (9) having a pulse duration of less than one nanosecond are sent onto said surface, **characterized in that** in the juxtaposed optical fields of the focusing systems (14) of at least two fixed devices, or in the field of at least one mobile device, said device(s) each comprising a laser source (8), a scanner (13) and said focusing system (14) for applying a structure in the form of wavelets to said surface over the width of said pulse, and scanning of said surface is performed by said scanner(s) (13) by said laser beams (9) along a series of successive lines (5, 6 ; 16, 17, 18, 16', 17', 18') in a relative direction of travel (7) of the part (1) and of the scanner(s) (13) and a series of lines lying in the continuation of each other in a direction perpendicular to said relative direction of travel (7), and each belonging to the optical field of the device(s), each line (5, 6; 16, 17, 18, 16', 17', 18') having a width equal to the diameter of said pulse, said optical fields of two fixed juxtaposed devices or the optical fields corresponding to two successive positions of said mobile device overlap in an overlapping area of width between twice the diameter of the pulse of the laser beam (9) and 2 cm, so that two lines lying in the continuation of each other overlap at a junction (2), and **in that** between two series of successive lines (5, 6; 16, 17, 18, 16', 17', 18') in a relative direction of travel (7) of the part (1) and of the scanner(s) (13), said junction zones (2) are arranged randomly or periodically organized in a random pattern with periodicity equal to at least ten times the maximum value of the offset between the junctions (2) on two successive lines (5, 6; 16, 16', 17, 17', 18, 18') in said relative direction of travel (7) inside said overlapping area of the optical fields, and **in that** between the performing of scanning along two successive lines (16, 17, 18, 16', 17', 18') in said relative direction of travel (7) of the part (1) and of the scanner(s) (13) , the polarization of the laser beam (9) is modified to create wavelets of different orientations on said two successive lines (16, 17, 18, 16', 17', 18') and of common two-by-two orientation in the direction perpendicular to the relative direction of travel (7).

2. The method according to claim 1, **characterized in that** the polarization of the laser beam (9) is modified in a periodic pattern, said periodic pattern extending over M consecutive lines (16, 17, 18, 16', 17', 18') in the relative direction of travel (7) of the part and of the scanners, M being equal to at least 2, preferably to at least 3.

3. The method according to claim 1 or 2, **characterized in that** two successive lines (16, 17, 18, 16', 17', 18') in the relative direction of travel (7) of the part (1) and of the scanners (13) have angles of polarization differing by at least 20°.

4. The method according to one of claims 1 to 3, **characterized in that** the polarizations of two lines (16, 17, 18, 16', 17', 18') of two contiguous fields lying in the continuation of each other are the same.

5. The method according to one of claims 1 to 4, **characterized in that** said relative movement of said surface of said part (1) and of the devices emitting said laser beams (9) is obtained by placing said part (1) on a mobile support (15).

6. The method according to one of claims 1 to 5, **characterized in that** said relative movement of said surface of said part (1) and of the devices emitting said laser beam(s) (9) is obtained by placing the device(s) emitting said laser beams (9) on a mobile support.

7. The method according to one of claims 1 to 6, **characterized in that** said part (1) is a metal sheet.

8. The method according to one of claims 1 to 6, **characterized in that** said surface of said part (1) is three-dimensional, and **in that** the distance is measured between the focusing system (14) and the surface of the part (1), and **in that** the focusing system (14) is controlled so that it guarantees that the diameter of the pulse and the fluence of the laser beam (9) are substantially the same irrespective of the effective distance between the focusing system (14) and the part (1).

9. The method according to one of claims 1 to 6, **characterized in that** said surface of said part (1) is three-dimensional, and **in that** the distance is measured between the focusing system (14) and the surface of the part (1), and **in that** the relative position of said device and of said surface is controlled so that the distance between said focusing system (14) and said surface remains the same when implementing the method.

10. The method according to one of claims 1 to 9, **characterized in that** said part (1) is in stainless steel.

11. A device for imparting an iridescent effect to the surface of a part (1) through the formation of wavelets on said surface by the pulse of a laser beam (9), **characterized in that** said device being formed of at least two fixed juxtaposed unit devices or of at least one mobile unit device, each comprising a laser source (8) generating a laser beam (9) of pulse duration less than 1 ns, an optical system (10) shaping the beam (9), a scanner (13) enabling the pulse of the beam (9), after it has passed through a focusing system (14), to scan in the form of lines (5, 6 ; 16, 17, 18, 16', 17', 18') an optical field on the surface of the part (1), said optical fields of two juxtaposed unit devices overlapping over a width of between twice the diameter of the pulse of the laser beam (9) and 2 cm containing the junctions (2) of two lines (5, 6 ; 16, 17, 18, 16', 17', 18') each produced by a unit device, and means for creating relative movement in a given direction (7) between said device and said part (1) to perform treatment on at least one portion of the surface of said part (1), the or each unit device comprise automated control means allowing synchronization of the relative movements of the support (15) of the sheet (1) and of the laser beam (9), and adjustment of the laser beam parameters (9) and focusing the laser beams (9), said scanners (13) of said unit devices being configured to arrange said junctions (2) so that together they form a random pattern, or are periodically organized in a random pattern with periodicity equal to at least ten times the maximum value of the offset between the junctions (2) on two successive lines (5, 6; 16, 17, 18, 16', 17', 18') in said relative direction of travel (7) inside said overlapping area of the optical fields, and **in that** the optical systems (10) of said unit devices comprise an optical polarizing system (12) imparting determined polarization to said beam (9), and means to cause this polarization to vary so that, on said surface, two contiguous lines (16, 17, 18, 16', 17', 18') in direction (7) are produced with pulses of different polarizations.

12. The device according to claim 11, **characterized in that** said unit devices allow the forming of two contiguous lines (16, 17, 18, 16', 17', 18') with pulses of which the polarizations differ by at least 20°.

13. The device according to one of claims 11 or 12, **characterized in that** said unit devices comprise means for measuring the distance between the focusing system (14) and the surface of the part (1) that are connected to means controlling the focusing system (14) so that the latter maintains a constant pulse diameter and constant fluence on said surface, irrespective of said distance.

14. The device according to one of claims 11 or 12, **characterized in that** said unit devices comprise means for measuring the distance between the focusing system (14) and the surface of the part (1), and **in that** these measuring means are connected to the means controlling the relative position of said device and said surface allowing the distance between said focusing system (14) and said surface to be maintained constant.

15. The device according to one of claims 11 to 14, **characterized in that** said means for creating relative movement in a given direction (7) between said device and said part (1) comprise a mobile support (15) for the part (1).

16. The device according to one of claims 11 to 15, **characterized in that** said means for creating relative movement between said device and said part (1) comprise a mobile support for said unit devices.
